# EUROPEAN PATENT APPLICATION

(11) **EP 2 336 808 A1**
(43) Date of publication of application: **22.06.2011**
(21) Application number: 10015690.0
(22) Date of filing: 15.12.2010
(51) Int. Cl.: G01S 19/25

(54) **Method and system for mobile device based GNSS position computation without ephemeris data**

(30) Priority: 18.12.2009 US 288243 P; 06.04.2010 US 754715
(71) Applicant: Broadcom Corporation, Irvine, CA 92617 (US)
(72) Inventor: De Salas Lasagabaster, Javier, 28016 Madrid (ES); Van Diggelen, Frank, 95120 San Jose, CA (US)
(74) Representative: Jehle, Volker Armin

(57) **Abstract**

A GNSS enabled mobile device receives GNSS assistance data comprising acquisition assistance data, from an A-GNSS server and calculates a relative GNSS position using the receive acquisition assistance data and a local code delay measurement, without using ephemeris data. The received GNSS assistance data comprises an approximate position, acquisition assistance data, satellite almanac data, and/or satellite azimuth and elevation fields, but no ephemeris data. The A-GNSS server calculates corresponding acquisition assistance data at a current time instant and/or one or more future time instants for the approximate position. The satellite azimuth and elevation fields are calculated using local GNSS measurements together with the acquisition assistance data in the received GNSS assistance data are used to calculate the relative GNSS position, which is added to the approximate position to generate an actual GNSS position.

## Description

### CROSS-REFERENCE TO RELATED APPLICATIONS/INCORPORATION BY REFERENCE

This patent application makes reference to, claims priority to and claims the benefit from United States Provisional Patent Application Serial No. 61/288,243 filed on December 18, 2009.

The above stated application is hereby incorporated herein by reference in its entirety.

### FIELD OF THE INVENTION

Certain embodiments of the invention relate to signal processing for satellite navigation systems. More specifically, certain embodiments of the invention relate to a method and system for mobile device based GNSS position computation without ephemeris data.

### BACKGROUND OF THE INVENTION

Location based services (LBS) are emerging as a new type of value-added service provided by mobile communication network. LBS are mobile services in which the user location information is used in order to enable various LBS applications such as, for example, enhanced 911 (E-911) services. A position of a mobile device is determined in different ways such as, for example, using network-based technology, using terminal-based technology, and/or hybrid technology (a combination of the former technologies). Many positioning technologies such as, for example, Cell of Origin (COO), Time of Arrival (TOA), Observed Time Difference of Arrival (OTDOA), Enhanced Observed Time Difference (E-OTD) as well as the Global navigation satellite-based systems (GNSS) such as GPS, GLONASS, Galileo, and/or Assisted-GNSS (A-GNSS), are in place to estimate the position (latitude and longitude) of the mobile device and convert it into a meaningful X, Y coordinate for LBS applications. A-GNSS technology combines satellite positioning and communication networks such as mobile networks to reach performance levels allowing the wide deployment of Location-Based Services. The A-GNSS technology uses assistance data provided from an A-GNSS server via, for example, a mobile telephony network, to speed up the process of acquiring a position of a GNSS-enabled mobile device especially in a weak signal environment. The A-GNSS server has access to a reference network of GNSS receivers that are placed in ideal locations (direct line-of-sight to satellites). The reference network may be used as a source for providing the assistance data, which comprise an ephemeris model (ephemeris data). The ephemeris data may be valid only for the visibility period of each detected satellite, which may be approximately 4 hours assuming that the receiver is static and the satellite is just rising above the horizon.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for mobile device based GNSS position computation without ephemeris data, substantially as shown in and/or described in connection with at least one of the figures, as set forth more completely in the claims.
According to an aspect, a method of processing signals comprises:
performing by one or more processors and/or circuits in a Global Navigation Satellite Systems (GNSS) enabled mobile device:
   receiving GNSS assistance data comprising acquisition assistance data from an assistance GNSS (A-GNSS) server; and
   calculating a relative GNSS position for said GNSS enabled mobile device using a local code delay measurement for at least one GNSS satellite, and said received acquisition assistance data, without utilizing ephemeris data.

Advantageously, said received GNSS assistance data does not comprise ephemeris data; and said received GNSS assistance data comprises an approximate position for said GNSS enabled mobile device, said acquisition assistance data associated with said approximate position for said GNSS enabled mobile device, expected code delay, satellite almanac data, and/or azimuth and elevation fields for said at least one GNSS satellite.

Advantageously, said received GNSS assistance data comprises said expected code delay with a resolution better than one GNSS chip.

Advantageously, said received GNSS assistance data comprises said azimuth and elevation fields for said at least one GNSS satellite with a resolution better than ten degrees.

Advantageously, the method further comprises calculating a line-of-sight vector between said at least one GNSS satellite and said approximate position utilizing said satellite almanac data for said at least one GNSS satellite in said received GNSS assistance data.

Advantageously, said A-GNSS server calculates said acquisition assistance data correspond to a current time instant and/or one or more future time instants for said approximate position.

Advantageously, the method further comprises calculating said azimuth and elevation fields for said at least one GNSS satellite using said acquisition assistance data in said received GNSS assistance data if said received GNSS assistance data does not comprise said azimuth and elevation fields for said at least one GNSS satellite.

Advantageously, the method further comprises calculating said relative GNSS position for said GNSS enabled mobile device with respect to said approximate position using one or more local GNSS measurements, said acquisition assistance data, and said azimuth and elevation fields for said at least one GNSS satellite.

Advantageously, the method further comprises adding said calculated relative GNSS position to said approximate position to generate an absolute GNSS position for said GNSS enabled mobile device when said received GNSS assistance data comprises said approximate position.

Advantageously, the method further comprises transmitting one or both of said calculated relative GNSS position and said calculated absolute GNSS position for said GNSS enabled mobile device to an associated communication network.

According to an aspect, a system for processing signals comprises:
one or more processors and/or circuits in a Global Navigation Satellite Systems (GNSS) enabled mobile device, wherein said one or more processors and/or circuits are operable to:
   receive GNSS assistance data comprising acquisition assistance data from an assistance GNSS (A-GNSS) server; and
   calculate a relative GNSS position for said GNSS enabled mobile device using a local code delay measurement for at least one GNSS satellite, and said received acquisition assistance data, without utilizing ephemeris data.

Advantageously, said received GNSS assistance data does not comprise ephemeris data; and said received GNSS assistance data comprises an approximate position for said GNSS enabled mobile device, said acquisition assistance data associated with said approximate position for said GNSS enabled mobile device, expected code delay, satellite almanac data, and/or azimuth and elevation fields for said at least one GNSS satellite.

Advantageously, said received GNSS assistance data comprises said expected code delay with a resolution better than one GNSS chip.

Advantageously, said received GNSS assistance data comprises said azimuth and elevation fields for said at least one GNSS satellite with a resolution better than ten degrees.

Advantageously, said one or more processors and/or circuits are operable to calculate a line-of-sight vector between said at least one GNSS satellite and said approximate position utilizing said satellite almanac data for said at least one GNSS satellite in said received GNSS assistance data.

Advantageously, said A-GNSS server calculates said acquisition assistance data correspond to a current time instant and/or one or more future time instants for said approximate position.

Advantageously, said one or more processors and/or circuits are operable to calculate said azimuth and elevation fields for said at least one GNSS satellite using said acquisition assistance data in said received GNSS assistance data if said received GNSS assistance data does not comprise said azimuth and elevation fields for said at least one GNSS satellite.

Advantageously, said one or more processors and/or circuits are operable to calculate said relative GNSS position for said GNSS enabled mobile device with respect to said approximate position using one or more local GNSS measurements, said acquisition assistance data, and said azimuth and elevation fields for said at least one GNSS satellite.

Advantageously, said one or more processors and/or circuits are operable to add said calculated relative GNSS position to said approximate position to generate an absolute GNSS position for said GNSS enabled mobile device when said received GNSS assistance data comprises said approximate position.

Advantageously, said one or more processors and/or circuits are operable to transmit one or both of said calculated relative GNSS position and said calculated absolute GNSS position for said GNSS enabled mobile device to an associated communication network.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to support MS based GNSS position computation without ephemeris data, in accordance with an embodiment of the invention.

FIG. 2 is a diagram illustrating an exemplary A-GNSS server that is operable to provide satellite acquisition data to a GNSS enabled mobile device to support MS based GNSS position computation without ephemeris data, in accordance with an embodiment of the invention.

FIG. 3 is a diagram illustrating an exemplary GNSS enabled mobile device that is operable to compute a GNSS position without ephemeris data, in accordance with an embodiment of the invention.

FIG. 4 is an exemplary flow chart illustrating steps used by an A-GNSS server to provide acquisition assistance data to a GNSS enabled mobile device to support MS based GNSS position computation without ephemeris data, in accordance with an embodiment of the invention.

FIG. 5 is an exemplary flow chart illustrating steps used by a GNSS enabled mobile device to compute a GNSS position without receiving ephemeris data from an A-GNSS server, in accordance with an embodiment of the invention.

### DETAILED DESCRIPTION OF THE INVENTION

Certain embodiments of the invention may be found in a method and system for mobile device based GNSS position computation without ephemeris data. Various aspects of the invention may comprise a GNSS enabled mobile device that is operable to receive GNSS assistance data comprising acquisition assistance data, from an A-GNSS server. Acquisition assistance data may comprise range and range rate information with associated uncertainties. Range and range rate information may be communicated in code phase and/or Doppler fields of the acquisition assistance data. Acquisition assistance data may also comprise expected code delay, azimuth and/or elevation information for each GNSS satellite in view. The GNSS enabled mobile device may be operable to utilize the received acquisition assistance data to acquire satellite signals faster. A relative GNSS position for the GNSS enabled mobile device is calculated utilizing acquisition assistance data in the received GNSS assistance data and a local code delay measurement for at least one GNSS satellite. The received GNSS assistance data does not comprise ephemeris data, but instead, may comprise an initial or approximate position for the GNSS enabled mobile device, an approximate time, extra resolution, for example, better than one GNSS chip, on the code phase, expected code delay, acquisition assistance data associated with the approximate position and time as well as satellite almanac data, and/or azimuth and elevation fields for the at least one GNSS satellite. Azimuth and elevation fields may be used to calculate unit vectors, namely, line-of-sight vectors, in the direction of the at least one GNSS satellite for the GNSS position calculation. The A-GNSS server is operable to identify an approximate position for the GNSS enabled mobile device. The A-GNSS server is operable to calculate acquisition assistance data at current time instant and/or one or more future time instants for the identified approximate position. In instances where the received GNSS assistance data does not comprise the azimuth and elevation fields for each of the GNSS satellites in view, the GNSS enabled mobile device is operable to calculate unit vectors in the direction of each GNSS satellite utilizing an approximate time, an almanac and/or an approximate position in the received GNSS assistance data. Azimuth and elevation fields for each GNSS satellite in view may be calculated utilizing the almanac and approximate position in the received GNSS assistance data so as to compute the unit vectors in the direction of each GNSS satellite. The GNSS enabled mobile device is operable to generate local GNSS measurements for each GNSS satellite in view to be used, together with the acquisition assistance data, and the azimuth and elevation fields for each GNSS satellite in view, for calculating the relative GNSS position with respect to the approximate position. In instances where the received GNSS assistance data comprises the approximate position for the GNSS enabled mobile device, an actual (absolute) GNSS position is generated by adding the calculated relative GNSS position to the approximate position. The calculated relative GNSS position and/ actual (absolute) GNSS position for the GNSS enabled mobile device may be transmitted to an associated communication network for LBS applications.

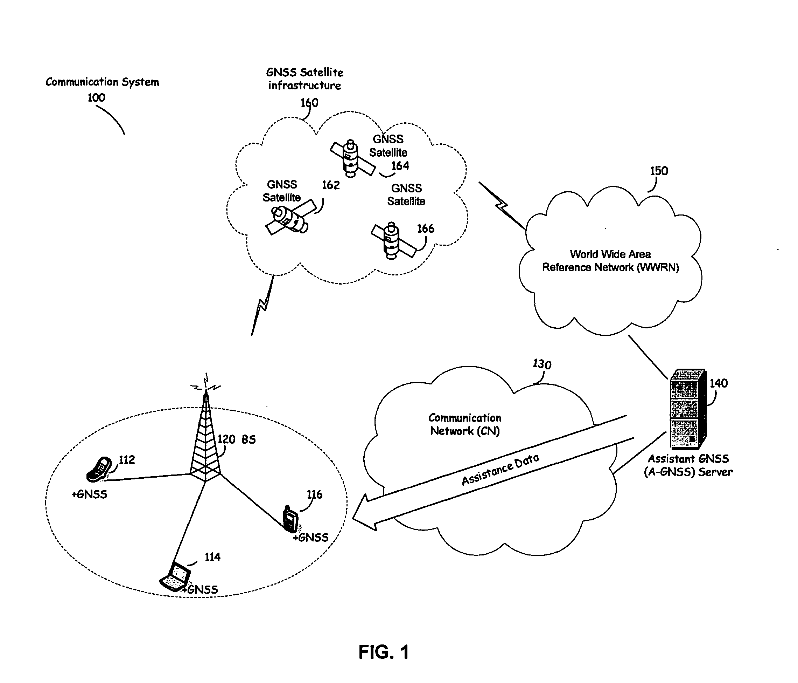

FIG. 1 is a diagram illustrating an exemplary communication system that is operable to support MS based GNSS position computation without ephemeris data, in accordance with an embodiment of the invention. Referring to FIG. 1, there is shown an A-GNSS satellite navigation system 100. The A-GNSS satellite navigation system 100 comprises a plurality of GNSS enabled mobile devices, of which GNSS enabled mobile devices 122-126 are displayed, a base station (BS) 120, a communication network 130, an A-GNSS server 140, a world wide reference network (WWRN) 150, and a plurality of GNSS satellites 160, of which GNSS satellites 162-166 are illustrated.

A GNSS enabled mobile device such as the GNSS enabled mobile device 112 may comprise suitable logic, circuitry, interfaces and/or code that may be operable to receive satellite broadcast signals from GNSS satellites in view such as, for example, the GNSS satellites 162-166. The received satellite signals may be used to generate a plurality of local GNSS measurements such as code delay measurements, phase measurements and pseudorange measurements. The GNSS enabled mobile device 112 may be operable to use the generated local GNSS measurement to determine its own GNSS position (latitude and longitude). The GNSS enabled mobile device 112 may be operable to transmit and/or receive radio signals across the communication network 130, which may support various telecommunication standards such as, for example, 3GPP, 3GPP2, LTE, WiFi and WiMAX. In order to achieve a fast position fix, the GNSS enabled mobile device 112 may be operable to acquire A-GNSS assistance data from the A-GNSS server 140 via the communication network 130. In this regard, the GNSS enabled mobile device 112 may be operable to generate an A-GNSS assistance data request and transmit to the A-GNSS server 140. In response, the GNSS enabled mobile device 112 may be operable to receive acquired A-GNSS assistance data from the A-GNSS server 140. In this regard, the acquired GNSS assistance data does not comprise ephemeris data. Instead, the acquired GNSS assistance data may comprise various other navigation elements such as, for example, current and/or predicted acquisition assistance data, satellite almanac data, extra resolution, for example, better than one GNSS chip, on the code phase, azimuth and elevation fields for each GNSS satellite, and/or an approximate position for the GNSS enabled mobile device 112. The azimuth and elevation fields may comprise azimuth and elevation data for corresponding GNSS satellites with resolution better than, for example, ten degrees. The approximate position for the GNSS enabled mobile device 112 may be a known GNSS position that the GNSS enabled mobile device 112 locks to. For example, the approximate position for the GNSS enabled mobile device 112 may be the GNSS position or position related information of a serving base station such as the BS 120.

The GNSS enabled mobile device 112 may be operable to utilize the acquired GNSS assistance data, namely, acquisition assistance data, extra resolution on the code phase, azimuth and elevation fields for each GNSS satellite, and/or satellite almanac data, to compute a relative GNSS position with respect to the approximate position for the GNSS enabled mobile device 112. More specifically, a relative GNSS position with respect to the approximate position for the GNSS enabled mobile device 112 may be calculated utilizing local GNSS measurements such as local code delay measurements from at least one satellite, and the acquired GNSS assistance data, without utilizing ephemeris data. In instances where the acquired GNSS assistance data may not comprise extra resolution on the code phase, azimuth and elevation fields for each GNSS satellite, the GNSS enabled mobile device 112 may be operable to use the approximate position and the satellite almanac data to calculate the azimuth and elevation fields with a desired resolution for each GNSS satellite. The calculated satellite azimuth and elevation fields together with, for example, current and/or predicted acquisition assistance data, and satellite almanac data may be utilized to compute the relative GNSS position for the GNSS enabled mobile device 112. In instances where an actual (absolute) GNSS position for the GNSS enabled mobile device 112 may be required, the GNSS enabled mobile device 112 may be operable to generate the actual GNSS position for the GNSS enabled mobile device 112 by adding the computed relative GNSS position to the approximate position. The GNSS enabled mobile device 112 may be operable to provide the computed relative GNSS position and/or the generated actual GNSS position to the communication network 130 to support various LBS applications such as location-based friends finding.

The BS 120 may comprise suitable logic, circuitry, interfaces and/or code that may be operable to perform air interface processing and schedule communication resources in both uplink communications and downlink communications for various associated mobile devices in a timely manner. The GNSS position for the BS 120 may be known at the A-GNSS server 140 and may be utilized as an approximate position for associated mobile devices such as the GNSS enabled mobile device 112. In this regard, information such as ranges from the BS 120 to each of the GNSS satellites in view such as, for example, the GNSS satellites 162-166, and range rates from each of the GNSS satellites 162-166 to the BS 120 may be utilized to compute relative GNSS positions for corresponding mobile devices such as the GNSS enabled mobile device 112.

The communication network 130 may comprise suitable logic, circuitry, interfaces and/or code that may be operable to provide various data services on a large-scale basis by using various technologies such as, for example, Ethernet, 3GPP, 3GPP2, LTE, WiFi and WiMAX. The communication network 130 may be a wired highspeed connection such as an Ethernet network, or may be a wireless network, for example, a WiMAX network.

The A-GNSS server 140 may comprise suitable logic, circuitry, interfaces and/or code that may be operable to access a satellite reference network such as, for example, the WWRN 150, to collect GNSS satellite data by tracking GNSS satellite constellations through the WWRN 150. The A-GNSS server 140 may be operable to generate A-GNSS assistance data, which may be utilized for acquiring a fast GNSS position for a GNSS-enabled mobile device especially in a weak signal environment. The generated A-GNSS assistance data may comprise various navigation elements such as, for example, acquisition assistance data, satellite almanac data, extra resolution on the code phase, azimuth and elevation fields for each of the GNSS satellites in view, and/or an approximate position for a GNSS enabled mobile device of interest. In addition, the A-GNSS server 140 may be operable to use Long Term Orbits (LTO) technology to provide accurate predicted A-GNSS assistance data for all healthy GNSS satellites in view. The predicted A-GNSS assistance data may be valid for up to, for example, 10 days in the future. In this regard, the A-GNSS server 140 may be operable to provide both current and predicted A-GNSS assistance data to a GNSS enabled mobile device of interest via the communication network 130. The A-GNSS server 140 may be operable to communicate with the communication network 130 via either a user-plane (data transmission) or a control-plane (signaling) for delivering the generated A-GNSS assistance data to users of interest. The A-GNSS server 140 may be operable to support messaging in exemplary formats that may be compatible with telecommunication networks such as 3GPP, 3GPP2, LTE, WiFi, WiMAX, and variants thereof. For example, the A-GNSS server 140 may be 3GPP standard compliant by supporting messaging in RRLP format, PCAP interface and OMA SUPL v1.0.

The WWRN 150 may comprise suitable logic, circuitry, interfaces and/or code that may be operable to collect and distribute data for GNSS satellites on a continuous basis. The WWRN 150 may comprise a plurality of GNSS reference tracking stations located around the world to A-GNSS coverage all the time in both a home network and/or any visited network. This allows users of the GNSS enabled devices such as the GNSS enabled mobile device 112 to roam with associated LBS applications anywhere in the world. The WWRN 150 may be operable to ensure high levels of availability and reliability for LBS performance.

The GNSS satellites 162 through 166 may comprise suitable logic, circuitry, interfaces and/or code that may be operable to generate and broadcast satellite navigational information in suitable radio-frequency (RF) signals to various GNSS capable devices such as, the GNSS enabled device 112. The broadcast satellite navigational information may be utilized to support LBS services. The GNSS satellites 162 through 166 may be GPS, Galileo, GLONASS and any other global or local navigation satellites.

In an exemplary operation, a GNSS enabled mobile device such as the GNSS enabled mobile device 112 may be operable to receive satellite broadcast signals from GNSS satellites in view such as the GNSS satellites 162-166. The received satellite signals may be used to generate local GNSS measurements such as code delay measurements, phase measurements and pseudorange measurements. To achieve a fast position the GNSS enabled mobile device 112 may be operable to send an A-GNSS assistance data request to the A-GNSS server 140 to acquire A-GNSS assistance data. In response, the A-GNSS server 140 may be operable to identify or determine an approximate position for the GNSS enabled mobile device 112. The identified approximate position may be, for example, the position of the BS 120. According to the identified approximate position for the GNSS enabled mobile device 112, the A-GNSS server 140 may be operable to calculate acquisition assistance data at current and/or future time instances using GNSS satellite data collected via the WWRN 150. The calculated acquisition assistance data for the identified approximate position may be used to generate A-GNSS assistance data for the GNSS mobile device 112. In addition, the generated A-GNSS assistance data may also comprise other navigation elements, for example, satellite almanac data, extra resolution, for example, better than one GNSS chip, on the code phase, azimuth and elevation fields for each of the GNSS satellites, and/or the identified approximate position. The generated A-GNSS assistance data may be communicated to the GNSS enabled mobile device 112 via the communication network 130. The GNSS enabled mobile device 112 may be operable to utilize the generated local GNSS measurements such as, for example, a code delay measurement from at least one GNSS satellite, and satellite navigation information in the received GNSS assistance data from the A-GNSS server 140 to compute a relative GNSS position for the GNSS enabled mobile device 112. In instances where the received GNSS assistance data comprises the approximate position for the GNSS enabled mobile device 112, the GNSS enabled mobile device 112 may be operable to generate an actual (absolute) GNSS position by adding the computed relative GNSS position to the approximate position. Depending on application and the availability of the approximate position, the GNSS enabled mobile device 112 may be operable to transmit the computed relative GNSS position and/or the generated actual GNSS position for the GNSS enabled mobile device 112 to the communication network 130.

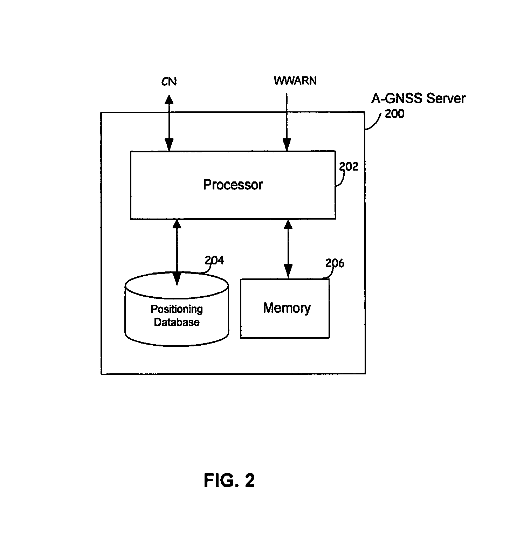

FIG. 2 is a diagram illustrating an exemplary A-GNSS server that is operable to provide satellite acquisition data to a GNSS enabled mobile device to support MS based GNSS position computation without ephemeris data, in accordance with an embodiment of the invention. Referring to FIG. 2, there is shown an A-GNSS server 200 comprising a processor 202, a positioning database 204 and a memory 206.

The processor 202 may comprise suitable logic, circuitry, interfaces and/or code that may be operable to generate A-GNSS assistance data for associated GNSS enabled mobile devices to achieve fast position fix. The processor 202 may be operable to collect GNSS satellite data from the WWRN 150. The collected GNSS satellite data may be utilized to generate A-GNSS assistance data in instances when it may be required. The processor 202 may be operable to receive a request for GNSS satellite data from, for example, the GNSS enabled mobile device 112. In response, the processor 202 may be operable to identify or determine an approximate position that the GNSS enabled mobile device 112 utilizes. The processor 202 may be operable to calculate acquisition assistance data according to the identified approximate position using the collected valid GNSS satellite data. The calculated acquisition assistance data are corresponding to specific time instants. In instances where the LTO technology may be implemented at the A-GNSS server 200, the processor 202 may be operable to utilize the collected valid GNSS satellite data to calculate and/or predict acquisition assistance data for the identified approximate position at specific time instances in the future. The predicted acquisition assistance data may be valid for, for example, up to 10 days in the future. The calculated and/or predicted acquisition assistance data may be utilized to generate A-GNSS assistance data for the GNSS mobile device 112. Depending on system capacity and/or the types of LBS applications, the generated A-GNSS assistance data may also comprise other navigation elements, for example, satellite almanac data, extra resolution on the code phase, azimuth and elevation fields for each of the GNSS satellites in view, and/or the identified approximate position. The processor 202 may be operable to communicate the generated A-GNSS assistance data to the GNSS enabled mobile device 112 via the communication network 130.

The positioning database 204 may comprise suitable logic, circuitry, interfaces and/or code that may be operable to manage and store reference positions and/or A-GNSS assistance data. The contents in the positioning database 204 may comprise, for example, reference position information, acquisition assistance data, satellite almanac data, and/or extra resolution on the code phase, azimuth and elevation fields for each of the GNSS satellites in view. The reference position information may comprise actual positions and/or position related identifiers such as, for example, Cell-ID, BS ID, and/or spectrum channel ID. The contents in the positioning database 204 may be updated aperiodically as needed, or periodically.

The memory 206 may comprise suitable logic, circuitry, interfaces and/or code that may be operable to store information such as executable instructions and data that may be utilized by the processor 202. The executable instructions may comprise algorithms that may be utilized to calculate A-GNSS assistance data using collected satellite data from the WWRN 150 automatically or upon request/signaled. The data may comprise ephemeris data. The memory 206 may comprise RAM, ROM, low latency nonvolatile memory such as flash memory and/or other suitable electronic data storage.

In an exemplary operation, the processor 202 may be operable to collect GNSS satellite data via the WWRN 150. The collected GNSS satellite data may be used to generate A-GNSS assistance data for an associated plurality of GNSS enabled mobile devices such as the GNSS enabled mobile device 112in instances when it may be required. For example, the processor 202 may be operable to receive a request from the GNSS enabled mobile device 112 for A-GNSS assistance data. In response, the processor 202 may be operable to communicate with the positioning database 204 to determine a reference position, namely an approximate position, for the GNSS enabled mobile device 112. Acquisition assistance data at specific time instances may be calculated using the collected GNSS satellite data for the determined approximate position. The processor 202 may be operable to generate A-GNSS assistance data for the GNSS enabled mobile device 112 using the calculated acquisition assistance data for the determined approximate position. The generated A-GNSS assistance data may also comprise other navigation elements, for example, satellite almanac data, extra resolution on the code phase, azimuth and elevation fields for each of the GNSS satellites in view, and/or the determined approximate position. The generated A-GNSS assistance data may be communicated to the GNSS enabled mobile device 112 via the communication network 130 for a fast position fix.

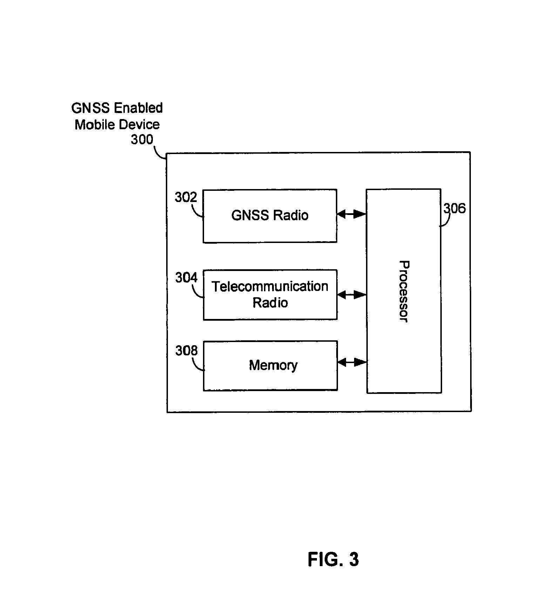

FIG. 3 is a diagram illustrating an exemplary GNSS enabled mobile device that is operable to compute a GNSS position without ephemeris data, in accordance with an embodiment of the invention. Referring to FIG. 3, there is shown a GNSS enabled mobile device 300. The GNSS enabled mobile device 300 comprises a GNSS radio 302, a telecommunication radio 304, a processor 306, and a memory 308.

The GNSS radio 302 may comprise suitable logic, circuitry, interfaces and/or code that may be operable to receive GNSS satellite broadcast signals and convert them to GNSS baseband signals, which may be suitable for further processing in the processor 306 for a navigation solution, whether GNSS based or A-GNSS based.

The telecommunication radio 304 may comprise suitable logic, circuitry, interfaces and/or code that may be operable to transmit and/or receive radio frequency (RF) signals over a telecommunication network such as the communication network 130. The received RF signals may be converted into corresponding baseband signals, which may be suitable for further processing by the processor 306. In this regard, the received radio signals may comprise A-GNSS assistance data with various navigation elements such as, for example, an approximate position, acquisition assistance data for the approximate position, satellite almanac data, and/or extra resolution on the code phase, azimuth and elevation fields for each GNSS satellite. In instances where the LTO technology may be implemented at the A-GNSS server 140, the received A-GNSS assistance data may also comprise predicted acquisition assistance data valid for, for example, up to 10 days in the future.

The processor 306 may comprise suitable logic, circuitry, interfaces and/or code that may be operable to process satellite signals directly received via the GNSS radio 302 as well as signals received via the telecommunication radio 304. The processor 306 may be operable to extract navigational information from the received satellite signal to generate local GNSS measurements. The generated local GNSS measurements may be utilized to compute a GNSS position for the GNSS enabled mobile device 300. To achieve a fast position fix, the processor 306 may be operable to acquire GNSS assistance data from the A-GNSS server 140. In this regard, the acquired GNSS assistance data may not comprise ephemeris data, instead, may comprise acquisition assistance data for an approximate position, satellite almanac data, extra resolution on the code phase, azimuth and elevation fields for each GNSS satellite, and/or the approximate position for the GNSS enabled mobile device 300. The processor 306 may be programmed or configured to calculate the GNSS position for the GNSS enabled mobile device 300 using the generated local GNSS measurements and A-GNSS assistance data. Specifically, a relative GNSS position for the GNSS enabled mobile device 300 is calculated with respect to the approximate position using GNSS measurements and navigation information such as acquisition assistance data. In instances where LTO A-GNSS assistance data may be available, the processor 306 may be operable to calculate a relative GNSS position for the GNSS enabled mobile device 300 using the generated local GNSS measurements and predicted acquisition assistance data in the acquired LTO A-GNSS assistance data even without a network connection between the GNSS enabled mobile device 300 and the A-GNSS server 140.

The memory 308 may comprise suitable logic, circuitry, interfaces and/or code that may be operable to store information such as executable instructions and data that may be utilized by the processor 306. The executable instructions may comprise algorithms that may be applied to calculate a GNSS position using local GPS measurements and A-GPS assistance data received from the A-GNSS server 140. The data may comprise the local GNSS measurements and the A-GNSS assistance data. The AGPS assistance data comprises satellite ranges and range rates for an approximate position, satellite almanac data, extra resolution on the code phase, azimuth and elevation fields for each GNSS satellite, and/or the approximate position. The memory 308 may comprise RAM, ROM, low latency nonvolatile memory such as flash memory and/or other suitable electronic data storage.

In an exemplary operation, the GNSS enabled mobile device 300 may be operable to receive satellite broadcast signals via the GNSS radio 302 and radio signals from the communication network 130 via the telecommunication radio 304, respectively. The received signals may be converted to corresponding baseband signals for further processing in the processor 306. The processor 306 may also be operable to utilize navigational information in the received satellite signal to generate local GNSS measurements. The processor 306 may also be operable to acquire GNSS assistance data from the A-GNSS server 140 to determine a fast position fix. The acquired A-GNSS assistance data may comprise satellite ranges and range rates for an approximate position, satellite almanac data, extra resolution on the code phase, azimuth and elevation fields for each GNSS satellite, and/or the approximate position for the GNSS enabled mobile device 300. The processor 302 may be operable to calculate a relative GNSS position with respect to the approximate position for the GNSS enabled mobile device 300 using the generated local GNSS measurements and the acquired A-GNSS assistance data. In instances where the approximate position may be available, the processor 306 may be operable to generate an actual (absolute) GNSS position for the GNSS enabled mobile device 300 by adding the calculated relative GNSS position to the approximate position. The processor 306 may be operable to transmit the calculated relative GNSS position and/or the generated actual GNSS position to the communication network 130 to support various LBS services such as location-based friends finding that is used to track and find friends and/or family members according to associated location information.

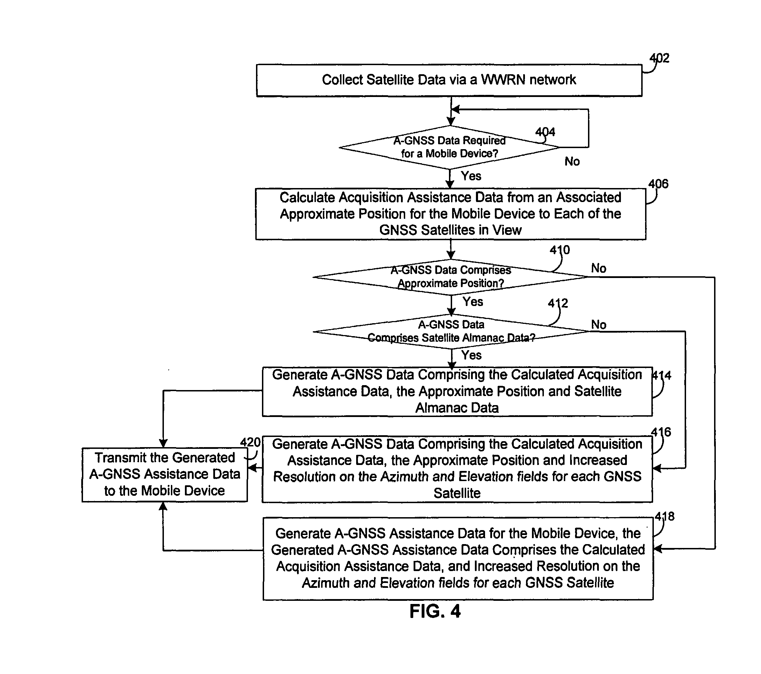

FIG. 4 is an exemplary flow chart illustrating steps used by an A-GNSS server to provide satellite acquisition assistance data to a GNSS enabled mobile device to support MS based GNSS position computation without ephemeris data, in accordance with an embodiment of the invention. Referring to FIG. 4, the exemplary steps may start with the step 402, where the A-GNSS server 140 may be operable to collect satellite data via a reference network such as the WWRN 150. In step 404, it may be determined whether A-GNSS assistance data may be required for a GNSS enabled mobile device such as the GNSS enabled mobile device 300. In instances where A-GNSS assistance data is required for the GNSS enabled mobile device 300, then in step 406, the A-GNSS server 140 may be operable to calculate acquisition assistance data from an approximate position for the GNSS enabled mobile device 300 to each of the GNSS satellites in view.

In step 410, it may be determined that whether the acquired A-GNSS assistance data may comprise the approximate position. In instances where the acquired A-GNSS assistance data may comprise the approximate position, then in step 412, it may be determined that whether the acquired A-GNSS assistance data may comprise satellite almanac data. In instances where the acquired A-GNSS assistance data may comprise satellite almanac data, then in step 414, the A-GNSS server 140 may be operable to generate A-GNSS data comprising the calculated satellite ranges and range rates, the approximate position and satellite almanac data. The exemplary steps continue in step 420, where the A-GNSS server 140 may be operable to transmit the generated A-GNSS data to the GNSS enabled mobile device 300 via the communication network 130.

In step 404, in instances where A-GNSS assistance data is not required for the GNSS enabled mobile device 300, then the exemplary steps remain in step 404.

In step 410, in instances where the acquired A-GNSS assistance data may not comprise the approximate position, then the exemplary steps continue in step 418, the A-GNSS server 140 may be operable to generate A-GNSS assistance data for the GNSS enabled mobile device 300, the generated A-GNSS assistance data comprises the calculated acquisition assistance data, and increased resolution on the code phase, azimuth and elevation fields for each GNSS satellite. The exemplary steps continue in step 420.

In step 412, in instances where the acquired A-GNSS assistance data may not comprise satellite almanac data, then in step 416, the A-GNSS server 140 may be operable to generate A-GNSS Data comprising the calculated satellite ranges and range rates, the approximate position and increased resolution on the code phase, azimuth and elevation fields for each GNSS satellite. The exemplary steps continue in step 420.

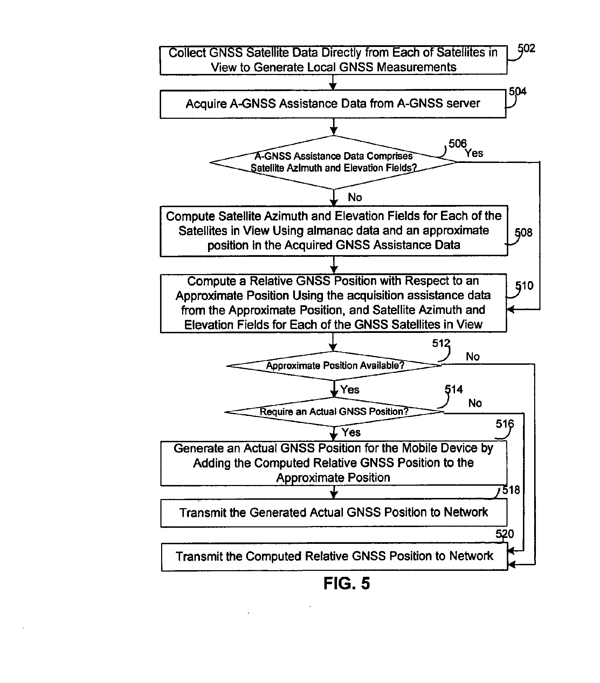

FIG. 5 is a flow chart illustrating exemplary steps used by a GNSS enabled mobile device to compute a GNSS position without receiving ephemeris data from an A-GNSS server, in accordance with an embodiment of the invention. Referring to FIG. 5, where the exemplary steps may start with the step 502, where a GNSS enabled mobile device such as the GNSS enabled mobile device 112 may be operable to collect GNSS satellite data directly from each of GNSS satellites in view, for example, the GNSS satellites 162-166, to generate local GNSS measurements. In step 504, the GNSS enabled mobile device 112 may be operable to acquire A-GNSS assistance data from the A-GNSS server 140 for a fast position fix. In step 506, it may be determined whether the acquired A-GNSS assistance data comprises the azimuth and elevation fields for each of the GNSS satellites in view. In instances where the acquired A-GNSS assistance data does not comprise the azimuth and elevation fields for each of the GNSS satellites in view, then in step 508, where the GNSS enabled mobile device 112 may be operable to compute the azimuth and elevation fields for each of the GNSS satellites in view using almanac data and an approximate position in the acquired GNSS assistance data. In step 510, the GNSS enabled mobile device 112 may be operable to compute a relative GNSS position with respect to an associated approximate position for the GNSS enabled mobile device 112 using the acquisition assistance data, and the azimuth and elevation fields for each of the GNSS satellites in view. In step 512, it may be determined whether the approximate position for the GNSS enabled mobile device 112 is available in the acquired A-GNSS assistance data. In instances where the approximate position for the GNSS enabled mobile device 112 is available in the acquired A-GNSS assistance data, then in step 514, it may be determined that whether an actual (absolute) GNSS position for the GNSS enabled mobile device 112 may be required to support LBS services of interest. In instances where an actual (absolute) GNSS position for the GNSS enabled mobile device 112 may be required to support LBS services of interest, then in step 516, the GNSS enabled mobile device 112 may be operable to generate an actual GNSS position for the GNSS enabled mobile device 112 by adding the computed relative GNSS position to the approximate position. In step 518, the GNSS enabled mobile device 112 may be operable to transmit the generated actual GNSS position to the communication network 130 to support LBS services of interest.

In step 506, in instances where the acquired A-GNSS assistance data comprise satellite azimuth and elevation fields for each of the GNSS satellites in view, then the exemplary steps continue in step 508, where

In step 512, in instances where the approximate position for the GNSS enabled mobile device 112 is not available in the acquired A-GNSS assistance data, then the exemplary steps continue in step 520, where the GNSS enabled mobile device 112 may be operable to transmit the computed relative GNSS position for the GNSS enabled mobile device to the communication network 130.

In step 514, in instances where an actual (absolute) GNSS position for the GNSS enabled mobile device 112 may not be required to support LBS services of interest, then the exemplary steps continue in step 520.

Aspects of a method and system for mobile device based GNSS position computation without ephemeris data are provided. In accordance with various embodiments of the invention, a GNSS enabled mobile device such as the GNSS enabled mobile device 112 may be operable to receive GNSS assistance data from the A-GNSS server 140. The received GNSS assistance data may comprise acquisition assistance data. The GNSS enabled mobile device 112 may be operable to calculate a relative GNSS position with respect to the approximate position using the acquisition assistance data in the received GNSS assistance data and a local code delay measurement for at least one GNSS satellite, without utilizing ephemeris data. The received GNSS assistance data does not comprise ephemeris data, instead, may comprise an approximate position for the GNSS enabled mobile device 112, extra resolution, for example, better than one GNSS chip, on the code phase, expected code delay, acquisition assistance data associated with the approximate position, satellite almanac data, and/or azimuth and elevation fields for the at least one GNSS satellite.

For a fast position fix, the GNSS enabled mobile device 112 may be operable to send a request to the A-GNSS server 140 for GNSS assistance data. In response, the A-GNSS server 140 may be operable to communicate with the positioning database 204 to identify and/or determine an approximate position (reference position) for the GNSS enabled mobile device 112. The identified approximate position for the GNSS enabled mobile device 112 may be, for example the GNSS position for the BS 120 that the GNSS enabled mobile device utilizes. The A-GNSS server 140 may be operable to calculate acquisition assistance data for the identified approximate position using GNSS satellite data collected via the WWRN 150. The calculated acquisition assistance data may correspond to a current time instant and/or one or more future time instants where the LTO technology may be implemented at the A-GNSS server 140. In instances where the received GNSS assistance data may not comprise an extra resolution on the code phase, azimuth and elevation fields for each of the GNSS satellites in view, the GNSS enabled mobile device 112 may be operable to calculate satellite azimuth and elevation fields for each GNSS satellite in view using the acquisition assistance data in the received GNSS assistance data.

The GNSS enabled mobile device 112 may be operable to receive GNSS broadcast data directly from GNSS satellites in view such as, for example, the GNSS satellites 162-166. The received GNSS satellites data may be used to generate one or more local GNSS measurements for each GNSS satellite in view. The GNSS enabled mobile device 112 may be operable to calculate the relative GNSS position for the GNSS enabled mobile device 112 with respect to the approximate position using the generated local GNSS measurements, the acquisition assistance data, and the azimuth and elevation fields for each GNSS satellite in view. In instances where the received GNSS assistance data may comprise the approximate position, the GNSS enabled mobile device 112 may be operable to generate an actual (absolute) GNSS position for the GNSS enabled mobile device 112 by adding the calculated relative GNSS position to the approximate position. Depending on corresponding LBS application, the GNSS enabled mobile device 112 may be operable to transmit the calculated relative GNSS position and/or the calculated actual (absolute) GNSS position for the GNSS enabled mobile device 112 to an associated communication network such as the communication network 130.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for mobile device based GNSS position computation without ephemeris data.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of processing signals, the method comprising:
performing by one or more processors and/or circuits in a Global Navigation Satellite Systems (GNSS) enabled mobile device:
receiving GNSS assistance data comprising acquisition assistance data from an assistance GNSS (A-GNSS) server; and
calculating a relative GNSS position for said GNSS enabled mobile device using a local code delay measurement for at least one GNSS satellite, and said received acquisition assistance data, without utilizing ephemeris data.

2. The method according to claim 1, wherein said received GNSS assistance data does not comprise ephemeris data; and said received GNSS assistance data comprises an approximate position for said GNSS enabled mobile device, said acquisition assistance data associated with said approximate position for said GNSS enabled mobile device, expected code delay, satellite almanac data, and/or azimuth and elevation fields for said at least one GNSS satellite.

3. The method according to claim 2, wherein said received GNSS assistance data comprises said expected code delay with a resolution better than one GNSS chip.

4. The method according to claim 2, wherein said received GNSS assistance data comprises said azimuth and elevation fields for said at least one GNSS satellite with a resolution better than ten degrees.

5. The method according to claim 2, comprising calculating a line-of-sight vector between said at least one GNSS satellite and said approximate position utilizing said satellite almanac data for said at least one GNSS satellite in said received GNSS assistance data.

6. The method according to claim 2, wherein said A-GNSS server calculates said acquisition assistance data correspond to a current time instant and/or one or more future time instants for said approximate position.

7. The method according to claim 2, comprising calculating said azimuth and elevation fields for said at least one GNSS satellite using said acquisition assistance data in said received GNSS assistance data if said received GNSS assistance data does not comprise said azimuth and elevation fields for said at least one GNSS satellite.

8. The method according to claim 7, comprising calculating said relative GNSS position for said GNSS enabled mobile device with respect to said approximate position using one or more local GNSS measurements, said acquisition assistance data, and said azimuth and elevation fields for said at least one GNSS satellite.

9. The method according to claim 8, comprising adding said calculated relative GNSS position to said approximate position to generate an absolute GNSS position for said GNSS enabled mobile device when said received GNSS assistance data comprises said approximate position.

10. The method according to claim 9, comprising transmitting one or both of said calculated relative GNSS position and said calculated absolute GNSS position for said GNSS enabled mobile device to an associated communication network.

11. A system for processing signals, the system comprising:
one or more processors and/or circuits in a Global Navigation Satellite Systems (GNSS) enabled mobile device, wherein said one or more processors and/or circuits are operable to:
receive GNSS assistance data comprising acquisition assistance data from an assistance GNSS (A-GNSS) server; and
calculate a relative GNSS position for said GNSS enabled mobile device using a local code delay measurement for at least one GNSS satellite, and said received acquisition assistance data, without utilizing ephemeris data.

12. The system according to claim 11, wherein said received GNSS assistance data does not comprise ephemeris data; and said received GNSS assistance data comprises an approximate position for said GNSS enabled mobile device, said acquisition assistance data associated with said approximate position for said GNSS enabled mobile device, expected code delay, satellite almanac data, and/or azimuth and elevation fields for said at least one GNSS satellite.

13. The system according to claim 12, wherein said received GNSS assistance data comprises said expected code delay with a resolution better than one GNSS chip.

14. The system according to claim 12, wherein said received GNSS assistance data comprises said azimuth and elevation fields for said at least one GNSS satellite with a resolution better than ten degrees.

15. The system according to claim 12, wherein said one or more processors and/or circuits are operable to calculate a line-of-sight vector between said at least one GNSS satellite and said approximate position utilizing said satellite almanac data for said at least one GNSS satellite in said received GNSS assistance data.
